(19) Europäisches Patentamt
European Patent Office
Office européen des brevets

(11) **EP 3 951 939 A1**

(12) **EUROPEAN PATENT APPLICATION**
published in accordance with Art. 153(4) EPC

(43) Date of publication:
**09.02.2022 Bulletin 2022/06**

(21) Application number: **20779960.2**

(22) Date of filing: **23.03.2020**

(51) International Patent Classification (IPC):
*H01M 4/36* (2006.01)     *H01M 4/66* (2006.01)
*H01M 4/70* (2006.01)     *H01M 10/052* (2010.01)

(52) Cooperative Patent Classification (CPC):
**H01M 4/36; H01M 4/66; H01M 4/70; H01M 10/052;**
Y02E 60/10

(86) International application number:
**PCT/JP2020/012626**

(87) International publication number:
**WO 2020/196372 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.03.2019   JP 2019056736**

(71) Applicant: **APB Corporation**
**Tokyo 101-0041 (JP)**

(72) Inventors:
• **KUSANO, Ryosuke**
  **Kyoto-shi, Kyoto 605-0995 (JP)**
• **HORIE Hideaki**
  **Tokyo 101-0033 (JP)**

(74) Representative: **Hoefer & Partner Patentanwälte mbB**
**Pilgersheimer Straße 20**
**81543 München (DE)**

(54) **LITHIUM ION BATTERY**

(57)     There is provided a lithium ion battery having a current collector and an electrode composition layer formed on a surface of the current collector, where the electrode composition layer contains coated electrode active material particles, each of which is obtained by coating at least a part of a surface of an electrode active material particle with a coating layer containing a polymer compound, the current collector has a conductive base material and a conductive composition layer containing a polymer compound and a conductive filler, on a surface of the conductive base material, the surface being in contact with the electrode composition layer, and the polymer compound contained in the conductive composition layer and the polymer compound contained in the coating layer have the same composition.

EP 3 951 939 A1

**Description**

Technical Field

The present invention relates to a lithium ion battery.

Background Art

In recent years, there has been an urgent need to reduce the carbon dioxide emission amount for environmental protection. In the automobile industry, it is expected that the introduction of an electric vehicle (EV) and a hybrid electric vehicle (HEV) reduce the carbon dioxide emission amount, and thus the development of a secondary battery for driving a motor, which holds the key to the practical application of such electric vehicles, is eagerly carried out. As the secondary battery, attention is focused on a lithium ion battery with which high energy density and high output density can be achieved.

An electrode of a lithium ion battery can be obtained by applying an electrode composition containing an electrode active material or the like onto a current collector or by forming the electrode composition into a shape of a sheet and then laminating it on the current collector. At this time, in a case where the affinity and the adhesiveness between the layer made of the electrode composition and the current collector are not sufficient, the internal resistance of the battery increases.

Patent Literature 1 discloses a current collector in which conductive fibers extending in a substantially vertical direction are arranged on a surface of the current collector for the purpose of improving the adhesiveness between a layer made of an electrode composition and the current collector.

Citation List

Patent Literature

[PTL 1] Japanese Unexamined Patent Application, First Publication No. 2017-117713

Summary of Invention

Technical Problem

However, it cannot be said that the affinity and the adhesiveness between the current collector and the layer made of an electrode composition, described in Patent Literature 1, are sufficient. In particular, in a case of adopting a method of forming an electrode composition into a shape of a sheet and then laminating it on the current collector as a method of manufacturing an electrode, the sheet-shaped electrode composition cannot be stably present on the current collector, which causes problems such as position displacement and gap generation, and thus there are problems such as the deterioration of performance of the obtained battery and the reduction of production efficiency.

Based on the above problems, it is an object of the present invention to provide a battery using a current collector having excellent affinity and adhesiveness to a layer made of an electrode composition.

Solution to Problem

As a result of diligent studies to solve these problems, the inventors of the present invention have made the present invention. That is, the present invention provides a lithium ion battery having a current collector and an electrode composition layer formed on a surface of the current collector, where the electrode composition layer contains coated electrode active material particles, each of which is obtained by coating at least a part of a surface of an electrode active material particle with a coating layer containing a polymer compound, the current collector has a conductive base material and a conductive composition layer containing a polymer compound and a conductive filler, on a surface of the conductive base material, the surface being in contact with the electrode composition layer, and the polymer compound contained in the conductive composition layer and the polymer compound contained in the coating layer have the same composition.
Advantageous Effects of Invention
According to the present invention, it is possible to obtain a battery using a current collector having excellent affinity and adhesiveness to a layer made of an electrode composition.

Description of Embodiments

Hereinafter, the present invention will be described in detail.

The present invention provides a lithium ion battery having a current collector and an electrode composition layer formed on a surface of the current collector, where the electrode composition layer contains coated electrode active material particles, each of which is obtained by coating at least a part of a surface of an electrode active material particle with a coating layer containing a polymer compound, the current collector has a conductive base material and a conductive composition layer containing a polymer compound and a conductive filler, on a surface of the conductive base material, the surface being in contact with the electrode composition layer, and the polymer compound contained in the conductive composition layer and the polymer compound contained in the coating layer have the same composition.

The lithium ion battery of the present invention has a current collector and an electrode composition layer formed on a surface of the current collector.

The electrode composition layer is made of an electrode composition, and the electrode composition contains coated electrode active material particles, each of which is obtained by coating at least a part of a surface of an electrode active material particle with a coating layer containing a polymer compound.

Examples of the positive electrode active material particle include a composite oxide of lithium and a transition metal {a composite oxide having one kind of transition metal ($LiCoO_2$, $LiNiO_2$, $LiAlMnO_4$, $LiMnO_2$, $LiMn_2O_4$, or the like), a composite oxide having two kinds of transition metal elements (for example, $LiFeMnO_4$, $LiNi_{1-x}CO_xO_2$, $LiMn_{1-y}Co_yO_2$, $LiNi_{1/3}Co_{1/3}Al_{1/3}O_2$, and $LiNi_{0.8}CO_{0.15}Al_{0.05}O_2$), a composite oxide having three or more kinds of transition metal elements [for example, $LiM_aM'_bM''_cO_2$ (where M, M', and M'' are transition metal elements different each other and satisfy a + b + c = 1, and one examples is $LiNi_{1/3}Mn_{1/3}CO_{1/3}O_2$)], or the like the like}, a lithium-containing transition metal phosphate (for example, $LiFePO_4$, $LiCoPO_4$, $LiMnPO_4$, or $LiNiPO_4$), a transition metal oxide (for example, $MnO_2$ and $V_2O_5$), a transition metal sulfide (for example, $MoS_2$ or $TiS_2$), and a conductive polymer (for example, polyaniline, polypyrrole, polythiophene, polyacetylene, poly-p-phenylene, or polyvinyl carbazole). Two or more thereof may be used in combination.

Here, the lithium-containing transition metal phosphate may be one in which a part of transition metal sites is substituted with another transition metal.

The volume average particle size of the positive electrode active material particles is preferably 0.01 to 100 $\mu$m, more preferably 0.1 to 35 $\mu$m, and still more preferably 2 to 30 $\mu$m, from the viewpoint of the electrical characteristics of the battery.

Examples of the negative electrode active material particles include a carbon-based material [graphite, nongraphitizable carbon, amorphous carbon, a resin sintered product (for example, a sintered product obtained by sintering and carbonizing a phenol resin, a furan resin, or the like), cokes (for example, a pitch coke, a needle coke, and a petroleum coke), carbon fiber, or the like], a silicon-based material [silicon, silicon oxide ($SiO_x$), a silicon-carbon composite body (a composite body obtained by coating surfaces of carbon particles with silicon and/or silicon carbide, a composite body obtained by coating surfaces of silicon particles or silicon oxide particles with carbon and/or silicon carbide, silicon carbide, or the like), a silicon alloy (a silicon-aluminum alloy, a silicon-lithium alloy, a silicon-nickel alloy, a silicon-iron alloy, a silicon-titanium alloy, a siliconmanganese alloy, a silicon-copper alloy, a silicon-tin alloy, or the like), or the like], a conductive polymer (for example, polyacetylene or polypyrrole), a metal (tin, aluminum, zirconium, titanium, or the like), a metal oxide (a titanium oxide, a lithium-titanium oxide, or the like), a metal alloy (for example, a lithium-tin alloy, a lithium-aluminum alloy, or a lithium-aluminum-manganese alloy), or the like, and a mixture of the above and a carbon-based material.

Among them, regarding negative electrode active material particles that do not contain lithium or lithium ions in the inside thereof, a part or all of the negative electrode active material particles may be subjected to pre-doping treatment to incorporate lithium or lithium ions in advance.

Among these, a carbon-based material, a silicon-based material, and a mixture thereof is preferable from the viewpoint of battery capacity and the like, The carbon-based material is more preferably graphite, nongraphitizable carbon, or amorphous carbon, and the silicon-based material is more preferably silicon oxide or a silicon-carbon composite body.

The volume average particle size of the negative electrode active material particles is preferably 0.01 to 100 $\mu$m, more preferably 0.1 to 20 $\mu$m, and still more preferably 2 to 10 $\mu$m, from the viewpoint of the electrical characteristics of the battery.

At least a part of the surface of the electrode active material particles is coated with a coating layer containing a polymer compound. Examples of the polymer compound include a fluororesin, a polyester resin, a polyether resin, a vinyl resin, a urethane resin, a polyamide resin, an epoxy resin, a polyimide resin, a silicone resin, a phenol resin, a melamine resin, a urea resin, an aniline resin, an ionomer resin, polycarbonate, polysaccharide (sodium alginate, or the like), and a mixture thereof.

Among these, a fluororesin, a polyester resin, a polyether resin, a vinyl resin, a urethane resin, a polyamide resin and a mixture thereof are preferable, and a vinyl resin is more preferable, from the viewpoint of wettability to and liquid absorption of an electrolyte solution.

The urethane resin is desirably a urethane resin (A) obtained by reacting an active hydrogen component (a1) and an isocyanate component (a2).

In a case where a lithium ion battery active material is coated with the urethane resin (A), the volume change of the electrode can be alleviated and the expansion of the electrode can be suppressed since the urethane resin (A) has flexibility.

It is desirable that the active hydrogen component (a1) contains at least one selected from the group consisting of a polyether diol, a polycarbonate diol, and a polyester diol.

Examples of the polyether diol include a polyoxyethylene glycol (hereinafter, abbreviated as PEG), a polyoxyethylene oxypropylene block copolymer diol, and a polyoxyethylene oxytetramethylene block copolymer diol, an ethylene oxide adduct of a low molecular weight glycol such as ethylene glycol, propylene glycol, 1,4-butanediol, 1,6-hexamethylene glycol, neopentyl glycol, bis(hydroxymethyl)cyclohexane, 4,4'-bis(2-hydroxyethoxy)-diphenylpropane, a condensed polyether ester diol obtained by reacting PEG having a number average molecular weight of 2,000 or less with one or more of dicarboxylic acids [an aliphatic dicarboxylic acid having 4 to 10 carbon atoms (for example, succinic acid, adipic acid, or sebacic acid), an aromatic dicarboxylic acid having 8 to 15 carbon atoms (for example, terephthalic acid or isophthalic acid), and the like], and a mixture of two or more thereof.

Among these, PEG, a polyoxyethylene oxypropylene block copolymer diol, or a polyoxyethylene oxytetramethylene block copolymer diol is preferable, and PEG is particularly preferable.

Examples of the polycarbonate diol include a polycarbonate polyol (for example, a polyhexamethylene carbonate diol) that is produced by carrying out condensation while carrying out a dealcoholization reaction, from one or more alkylene diols having an alkylene group having 4 to 12 carbon atoms, preferably 6 to 10 carbon atoms, and more preferably 6 to 9 carbon atoms, and a low molecular weight carbonate compound (for example, a dialkyl carbonate having an alkyl group having 1 to 6 carbon atoms, an alkylene carbonate having an alkylene group having 2 to 6 carbon atoms, or a diaryl carbonate having an aryl group having 6 to 9 carbon atoms).

Examples of the polyester diol include a condensed polyester diol obtained by reacting a low molecular weight diol and/or a polyether diol having a number average molecular weight of 1,000 or less with one or more dicarboxylic acids described above, and a polylactone diol obtained by the ring-opening polymerization of a lactone having 4 to 12 carbon atoms. Examples of the low molecular weight diol include the low molecular weight glycols exemplified in the section of the polyether diol described above. Examples of the polyether diol having a number average molecular weight of 1,000 or less include polyoxypropylene glycol and PTMG. Examples of the lactone include $\varepsilon$-caprolactone and $\gamma$-valerolactone. Specific examples of the polyester diol include a polyethylene adipate diol, a polybutylene adipate diol, a polyneopentylene adipate diol, a poly(3-methyl-1,5-pentylene adipate)diol, a polyhexamethylene adipate diol, a polycaprolactone diol, and a mixture of two or more thereof.

As the isocyanate component (a2), an isocyanate component that is conventionally used in polyurethane production can be used. Such an isocyanate include an aromatic diisocyanate having 6 to 20 carbon atoms (excluding a carbon atom in the NCO group, the same applies hereinafter), an aliphatic diisocyanate having 2 to 18 carbon atoms, an alicyclic diisocyanate having 4 to 15 carbon atoms, an aromatic aliphatic diisocyanate having 8 to 15 carbon atoms, a modified product of these diisocyanates (a carbodiimide modified product, a urethane modified product, a uretdione modified product, or the like), and a mixture of two or more thereof.

Specific examples of the aromatic diisocyanate include 1,3- or 1,4-phenylene diisocyanate, 2,4- or 2,6-tolylene diisocyanate, 2,4'-or 4,4'-diphenylmethane diisocyanate (hereinafter, diphenylmethane diisocyanate is abbreviated as MDI), 4,4'-diisocyanato biphenyl, 3,3'-dimethyl-4,4'-diisocyanato biphenyl, 3,3'-dimethyl-4,4'-diisocyanato diphenylmethane, and 1,5-naphthylene diisocyanate.

Specific examples of the aliphatic diisocyanate include ethylene diisocyanate, tetramethylene diisocyanate, hexamethylene diisocyanate, dodecamethylene diisocyanate, 2,2,4-trimethylhexamethylene diisocyanate, lysine diisocyanate, 2,6-diisocyanatomethyl caproate, bis(2-isocyanatoethyl)carbonate, and 2-isocyanatoethyl-2,6-diisocyanatohexanoate.

Specific examples of the alicyclic diisocyanate include isophorone diisocyanate, dicyclohexylmethane-4,4'-diisocyanate, cyclohexylene diisocyanate, methylcyclohexylene diisocyanate, bis(2-isocyanatoethyl)-4-cyclohexylene-1,2-dicarboxylate, and 2,5- or 2,6-norbornane diisocyanate.

Specific examples of the aromatic aliphatic diisocyanate include m- or p-xylylene diisocyanate and $\alpha,\alpha,\alpha',\alpha'$-tetramethylxylylene diisocyanate.

Among these, an aromatic diisocyanate or an alicyclic diisocyanate is preferable, an aromatic diisocyanate is more preferable, and MDI is particularly preferable.

In a case where the urethane resin (A) contains a polymer diol (a11) and the isocyanate component (a2), the equivalent ratio of (a2)/(a11) is preferably 10 to 30/1 and more preferably 11 to 28/1. In a case where the ratio of the isocyanate component (a2) is more than 30 equivalents, a hard coating film is formed.

The number average molecular weight of the urethane resin (A) is preferably 40,000 to 500,000 and more preferably 50,000 to 400,000. In a case where the number average molecular weight of the urethane resin (A) is less than 40,000, the hardness of the coating film is low, and in a case of being more than 500,000, the solution viscosity is high, and thus a uniform coating film may not be obtained.

The number average molecular weight of the urethane resin (A) is measured by gel permeation chromatography (hereinafter, abbreviated as GPC) using dimethylformamide (hereinafter, abbreviated as DMF) as a solvent and polyoxypropylene glycol as a standard substance. The sample concentration may be 0.25% by weight, each of TSKgel SuperH2000, TSKgel SuperH3000, and TSKgel SuperH4000 (all manufactured by Tosoh Corporation) is connected as the column stationary phase, and the column temperature may be 40°C.

The urethane resin (A) can be produced by reacting the active hydrogen component (a1) with the isocyanate component (a2).

Examples of the production method therefor include an one-shot method in which the isocyanate component (a2), the polymer diol (a11), and a chain extender (a13) are reacted at the same time, where the polymer diol (all) and the chain extender (a13) are used as the active hydrogen component (a1), and a prepolymer method in which, first, the polymer diol (all) is reacted with the isocyanate component (a2), and then the chain extender (a13) is subsequently reacted.

Further, the urethane resin (A) can be produced in the presence or absence of a solvent inert to the isocyanate group. Examples of the suitable solvent that is used in a case the production is carried out in the presence of a solvent include an amide-based solvent [DMF, dimethylacetamide, or the like], a sulfoxide-based solvent (dimethyl sulfoxide or the like), a ketone-based solvent [methyl ethyl ketone, methyl isobutyl ketone, or the like], an aromatic solvent (toluene, xylene, or the like), an ether-based solvent (dioxane, tetrahydrofuran, or the like), an ester-based solvent (ethyl acetate, butyl acetate, or the like), and a mixture of two or more thereof. Among these, the preferred one is an amide-based solvent, a ketone-based solvent, an aromatic solvent, or a mixture of two or more thereof.

The reaction temperature in the production of the urethane resin (A) is desirably 20°C to 100°C in a case where a solvent is used and 20°C to 220°C in a case where no solvent is used.

The urethane resin (A) can be produced with a production apparatus that is generally used in the related industry. In a case where a solvent is not used, a production apparatus such as a kneader or an extruder can be used. The urethane resin (A) produced in this manner has a solution viscosity of generally 10 to 10,000 poise/20°C in a case of being measured as a 30% by weight (solid content) DMF solution and is practically preferably 100 to 2,000 poise/20°C.

It is desirable that the vinyl resin contains a polymer (B) containing a vinyl monomer (b) as an essential constituent monomer.

In a case where the positive electrode active material particle is coated with the polymer (B), the volume change of the electrode can be alleviated and the expansion of the electrode can be suppressed since the polymer (B) containing the vinyl monomer (b) as an essential constituent monomer has flexibility.

In particular, it is desirable that a vinyl monomer (b1) having a carboxyl group and a vinyl monomer (b2) represented by General Formula (1) are contained as the vinyl monomer (b).

$$CH_2=C(R^1)COOR^2 \qquad (1)$$

[In General Formula (1), $R^1$ is a hydrogen atom or a methyl group, and $R^2$ is a branched alkyl group having 4 to 36 carbon atoms.]

Examples of the vinyl monomer (b1) having a carboxyl group include a monocarboxylic acid having 3 to 15 carbon atoms, such as (meth)acrylic acid, crotonic acid, or cinnamic acid; a dicarboxylic acid having 4 to 24 carbon atoms, such as (anhydrous) maleic acid, fumaric acid, or (anhydrous) itaconic acid, citraconic acid, and measaconic acid; and a trivalent, tetravalent, or higher valent polycarboxylic acid having 6 to 24 carbon atoms, such as aconitic acid. Among these, (meth)acrylic acid is preferable and methacrylic acid is particularly preferable.

In the vinyl monomer (b2) represented by General Formula (1), $R^1$ represents a hydrogen atom or a methyl group. $R^1$ is preferably a methyl group.

$R^2$ is a branched alkyl group having 4 to 36 carbon atoms. Specific examples of $R^2$ include a 1-alkylalkyl group (a 1-methylpropyl group (a sec-butyl group), a 1,1-dimethylethyl group (a tert-butyl group), a 1-methylbutyl group, a 1-ethylpropyl group, a 1,1-dimethylpropyl group, a 1-methylpentyl group, a 1-ethylbutyl group, a 1-methylhexyl group, a 1-ethylpentyl group, a 1-methylheptyl group, a 1-ethylhexyl group, a 1-methyloctyl group, a 1-ethylheptyl group, a 1-methylnonyl group, a 1-ethyloctyl group, a 1-methyldecyl group, a 1-ethylnonyl group, a 1-butyleicosyl group, a 1-hexyloctadecyl group, a 1-octylhexadecyl group, a 1-decyltetradecyl group, a 1-undecyltridecyl group, or the like), a 2-alkylalkyl group (a 2-methylpropyl group (an iso-butyl group), a 2-methylbutyl group, a 2-ethylpropyl group, a 2,2-dimethylpropyl group, a 2-methylpentyl group, a 2-ethylbutyl group, a 2-methylhexyl group, a 2-ethylpentyl group, a 2-methylheptyl group, a 2-ethylhexyl group, a 2-methyloctyl group, a 2-ethylheptyl group, a 2-methylnonyl group, a 2-ethyloctyl group, a 2-methyldecyl group, a 2-ethylnonyl group, a 2-hexyloctadecyl group, a 2-octylhexadecyl group, a 2-decyltetradecyl group, a 2-undecyltridecyl group, a 2-dodecylhexadecyl group, a 2-tridecylpentadecyl group, a 2-decyloctadecyl group, a 2-tetradecyloctadecyl group, a 2-hexadecyloctadecyl group, a 2-tetradecyleicosyl group, a 2-hexadecyleicosyl group, or the like), a 3 to 34-alkylalkyl group (a 3-alkylalkyl group, a 4-alkylalkyl group, a 5-alkylalkyl group, a 32-alkylalkyl group, a 33-alkylalkyl group, a 34-alkylalkyl group, or the like), and a mixed alkyl group containing one or more branched alkyl groups, such as an alkyl residue of an oxo alcohol, corresponding to a propylene oligomer (a 7- to 11-mer), an ethylene/propylene (molar ratio 16/1 to 1/11) oligomer, an isobutylene oligomer (a 7- to 8-mer), or an $\alpha$-olefin (having 5 to 20 carbon atoms) oligomer (a 4- to 8-mer).

Among these, a 2-alkylalkyl group is preferable, and a 2-ethylhexyl group or a 2-decyltetradecyl group is more preferable, from the viewpoint of liquid absorption of an electrolyte solution.

The preferred lower limit of the number average molecular weight of the polymer (B) is 3,000, more preferably 50,000, particularly preferably 100,000, and most preferably 200,000, and the preferred upper limit thereof is 2,000,000, more preferably 1,500,000, particularly preferably 1,000,000, and most preferably 800,000.

The number average molecular weight of the polymer (B) can be determined by the gel permeation chromatography (GPC) measurement under the following conditions.

Apparatus: Alliance GPC V2000 (manufactured by Waters Corporation)
Solvent: orthodichlorobenzene
Standard substance: polystyrene
Sample concentration: 3 mg/ml
Column stationary phase: PLgel 10 $\mu$m, two MIXED-B columns connected in series (manufactured by Polymer Laboratories Inc.)
Column temperature: 135°C

The polymer (B) can be produced by a known polymerization method (bulk polymerization, solution polymerization, emulsion polymerization, suspension polymerization, or the like).

In the polymerization, a known polymerization initiator [a azo-based initiator [2,2'-azobis(2-methylpropionitrile), 2,2'-azobis(2,4-dimethylvaleronitrile, or the like), a peroxide-based initiator (benzoyl peroxide, di-t-butyl peroxide, lauryl peroxide, or the like)],or the like] can be used.

The amount of the polymerization initiator to be used is preferably 0.01% to 5% by weight more preferably 0.05% to 2% by weight based on the total weight of the monomers.

Examples of the solvents to be used in the solution polymerization include an ester (having 2 to 8 carbon atoms, for example, ethyl acetate or butyl acetate), an alcohol (having 1 to 8 carbon atoms, for example, methanol, ethanol, or octanol), a hydrocarbon (having 4 to 8 carbon atoms, for example, n-butane, cyclohexane, or toluene), an amide (for example, DMF or dimethylacetamide) and a ketone (having 3 to 9 carbon atoms, for example, methylethylketone), and the amount to be used is 5% to 900% and preferably 10% to 400% based on the total weight of the monomers, and the monomer concentration is 10% to 95% by weight and preferably 20% to 90% by weight.

Examples of the dispersion medium in the emulsification polymerization and the suspension polymerization include water, an alcohol (for example, ethanol), an ester (for example, ethyl propionate), and light naphtha, and examples of the emulsifying agent include a higher fatty acid (having 10 to 24 carbon atoms) metal salt (for example, sodium oleate or sodium stearate), a higher alcohol (10 to 24 carbon atoms) sulfate ester metal salt (for example, sodium lauryl sulfate), an ethoxylated tetramethyl decinediol, and sodium sulfoethyl methacrylate, dimethylaminomethyl methacrylate. Further, polyvinyl alcohol, a polyvinyl pyrrolidone, or the like may be added as a stabilizer.

The monomer concentration of the solution or dispersion liquid is 5% to 95% by weight, the amount of polymerization initiator to be used is 0.01% to 5% based on the total weight of the monomers, and preferably 0.05% to 2% from the viewpoints of adhesive force and cohesive force.

In the polymerization, a known chain transfer agent such as a mercapto compound (dodecyl mercaptan, n-butyl mercaptan, or the like) and a halogenated hydrocarbon (carbon tetrachloride, carbon tetrabromide, benzyl chloride, or the like) can be used. From the viewpoints of adhesive force and cohesive force, the amount to be used is 2% or less and preferably 0.5% or less based on the total weight of the monomers.

The temperature inside the system in the polymerization reaction is -5°C to 150°C and preferably 30°C to 120°C, the reaction time is 0.1 to 50 hours and preferably 2 to 24 hours. The end point of the reaction can be confirmed by the amount of the unreacted monomers being 5% by weight or less and preferably 1% by weight or less of the total amount of the monomers used.

The lithium ion battery of the present invention has an electrode composition layer formed on a surface of a current collector, and the electrode composition layer contains coated electrode active material particles, each of which is obtained by coating at least a part of a surface of an electrode active material particle with a coating layer containing the above-described polymer compound.

The weight proportion of the polymer compound based on the coated electrode active material particles is preferably 1% to 20% by weight and more preferably 2% to 7% by weight from the viewpoint of formability and resistance value.

The coating layer may contain a conductive auxiliary agent as necessary.

Examples of the conductive auxiliary agent include, but are not limited thereto, a metal [nickel, aluminum, stainless steel (SUS), silver, copper, titanium, or the like], carbon [graphite or carbon black (acetylene black, Ketjen black, furnace black, channel black, thermal lamp black, or the like), or the like], and a mixture thereof.

One kind of these conductive auxiliary agents may be used alone, or two or more kinds thereof may be used in combination. Moreover, an alloy or metal oxide thereof may be used. From the viewpoint of electrical stability, aluminum, stainless steel, carbon, silver, copper, titanium, a mixtures thereof is preferable, silver, aluminum, stainless steel, or carbon is more preferable, and carbon is still more preferable. Further, these conductive auxiliary agents may be those obtained by coating a conductive material (a metallic conductive material among the above-described conductive auxiliary agent materials) around a particle-based ceramic material or a resin material with plating or the like.

The average particle size of the conductive auxiliary agent is not particularly limited; however, it is preferably 0.01 to 10 $\mu$m, more preferably 0.02 to 5 $\mu$m, and still more preferably 0.03 to 1 $\mu$m, from the viewpoint of the electrical characteristics of the battery. In the present specification, the "particle size" means the maximum distance L among the distances between any two points on the contour line of the conductive auxiliary agent. As the value of the "average particle size", the average value of the particle sizes of the particles observed in several to several tens of visual fields using an observation means such as a scanning electron microscope (SEM) or a transmission electron microscope (TEM) shall be adopted.

The shape (form) of the conductive auxiliary agent is not limited to the particle form, may be a form other than the particle form, and may be a form practically applied as a so-called filler-based conductive resin composition such as carbon nanotubes.

The conductive auxiliary agent may be a conductive fiber of which the shape is fibrous.

Examples of the conductive fiber include a carbon fiber such as a PAN-based carbon fibers or a pitch-based carbon fiber, a conductive fiber obtained by uniformly dispersing a metal having good conductivity or graphite in the synthetic fiber, a metal fiber obtained by making a metal such as stainless steel into a fiber, a conductive fiber obtained by coating a surface of an organic fiber coated with a metal, and a conductive fiber obtained by coating a surface of an organic fiber with a resin containing a conductive substance. Among these conductive fibers, a carbon fiber is preferable. In addition, a polypropylene resin in which graphene is kneaded is also preferable.

In a case where the conductive auxiliary agent is a conductive fiber, the average fiber diameter thereof is preferably 0.1 to 20 $\mu$m.

A method of producing coated electrode active material particles will be described.

The coated electrode active material particles may be produced, for example, by mixing the polymer compound, the electrode active material particles, and a conductive auxiliary agent that is used as necessary, or may be produced by mixing the polymer compound with a conductive auxiliary agent to prepare a coating material, and then mixing the coating material with the electrode active material particles.

In a case where the electrode active material particles, the polymer compound, and the conductive auxiliary agent are mixed, the mixing order is not particularly limited; however, it is preferable that the electrode active material particles are mixed with the polymer compound and then a conductive auxiliary agent is added and further mixed.

By the above method, at least a part of the surface of the electrode active material is coated with a coating layer containing the polymer compound and a conductive auxiliary agent that is used as necessary.

For example, in a state where the electrode active material particles are placed in an all-purpose mixer and stirred at 30 to 500 rpm, a resin composition solution containing the polymer compound and a conductive auxiliary agent as necessary are added dropwise and mixed over 1 to 90 minutes, a conductive auxiliary agent as necessary is further mixed, the temperature is raised to 50°C to 200°C with stirring, and the pressure is reduced to 0.007 to 0.04 MPa and then is held for 10 to 150 minutes, whereby the coated electrode active material particles can be obtained.

The electrode composition layer is made of an electrode composition.

The electrode composition may contain a conductive auxiliary agent as necessary. Examples of the conductive auxiliary agent include those described above. The weight proportion of the conductive auxiliary agent contained in the electrode composition, including the conductive auxiliary agent contained in the coating layer of the coated active material particles, is preferably 0.1% to 12% weight, more preferably 0.5% to 10% by weight, and particularly preferably 1.0% to 8.0% by weight, based on the weight of the electrode active material layer. In a case where the weight proportion of the conductive auxiliary agent contained in the electrode composition is in this range, the electrical characteristics of the obtained battery are good.

The content of an electrode binder (also simply referred to as a binding agent or a binder) contained in the electrode composition is preferably 1% by weight or less based on the weight of the electrode composition, and it is preferable that the electrode binder is substantially not contained.

Examples of the electrode binder for an electrode include starch, polyvinyl alcohol, carboxymethyl cellulose, polyvinyl pyrrolidone, tetrafluoroethylene, polyethylene, polypropylene, and a styrene-butadiene copolymer. These binders for an electrode are known as the binding agent for a lithium ion battery that is used for binding and fixing electrode active materials to each other and binding and fixing the electrode active material and the current collector. These binders are used by being dissolved or dispersed in a solvent, and the solvent is volatilized and distilled off so that the binder is solidified and precipitated, which makes the electrode active materials bind to each other and bind the electrode active material to the current collector.

The current collector included in the lithium ion battery of the present invention has a conductive base material and a conductive composition layer containing a polymer compound and a conductive filler, on a surface of the conductive base material, the surface being in contact with the electrode composition layer. The polymer compound contained in the conductive composition layer and the polymer compound contained in the coating layer have the same composition.

The conductive base material is not particularly limited as long as it has conductivity; however, it is possible to suitably use a known metallic base material, a resinous base material composed of a conductive material and a resin (which is described as a resin current collector in Japanese Unexamined Patent Application, First Publication No. 2012-150905 or the like), or the like.

Examples of the metallic base material include one or more metal materials selected from the group consisting of copper, aluminum, titanium, nickel, tantalum, niobium, hafnium, zirconium, zinc, tungsten, bismuth, antimony, an alloy containing one or more these metals, and a stainless alloy. These metal materials may be used in the form of a thin plate, a metal foil, or the like. Further, a material obtained by forming the above metal material on a surface of a base material other than the above metal materials by a method such as sputtering, electrodeposition, or coating may be used as the metallic base material.

Examples of the conductive material constituting the resinous base material include, but are not limited thereto, a metal [nickel, aluminum, stainless steel (SUS), silver, copper, titanium, or the like], carbon [graphite or carbon black (acetylene black, Ketjen black, furnace black, channel black, thermal lamp black, or the like), or the like], and a mixture thereof.

One kind of these conductive materials may be used alone, or two or more kinds thereof may be used in combination. Moreover, an alloy or metal oxide thereof may be used. From the viewpoint of electrical stability, aluminum, stainless steel, carbon, silver, copper, titanium, a mixtures thereof is preferable, silver, aluminum, stainless steel, or carbon is more preferable, and carbon is still more preferable. Further, these conductive materials may be those obtained by coating a conductive material (a metallic conductive material among the above-described conductive materials) around a particle-based ceramic material or a resin material with plating or the like.

The average particle size of the conductive material is not particularly limited; however, it is preferably 0.01 to 10 $\mu$m, more preferably 0.02 to 5 $\mu$m, and still more preferably 0.03 to 1 $\mu$m, from the viewpoint of the electrical characteristics of the battery. In the present specification, the "particle size" means the maximum distance L among the distances between any two points on the contour line of the conductive material. As the value of the "average particle size", the average value of the particle sizes of the particles observed in several to several tens of visual fields using an observation means such as a scanning electron microscope (SEM) or a transmission electron microscope (TEM) shall be adopted.

The shape (form) of the conductive material is not limited to the particle form, may be a form other than the particle form, and may be a form practically applied as a so-called filler-based conductive resin composition such as carbon nanotubes.

The conductive material may be a conductive fiber of which the shape is fibrous.

Examples of the conductive fiber include a carbon fiber such as a PAN-based carbon fibers or a pitch-based carbon fiber, a conductive fiber obtained by uniformly dispersing a metal having good conductivity or graphite in the synthetic fiber, a metal fiber obtained by making a metal such as stainless steel into a fiber, a conductive fiber obtained by coating a surface of an organic fiber coated with a metal, and a conductive fiber obtained by coating a surface of an organic fiber with a resin containing a conductive substance. Among these conductive fibers, a carbon fiber is preferable. In addition, a polypropylene resin in which graphene is kneaded is also preferable.

In a case where the conductive material is a conductive fiber, the average fiber diameter thereof is preferably 0.1 to 20 $\mu$m.

Examples of the resin constituting the resinous base material include polyethylene (PE), polypropylene (PP), polymethylpentene (PMP), polycycloolefin (PCO), polyethylene terephthalate (PET), polyether nitrile (PEN), polytetrafluoroethylene (PTFE), styrene butadiene rubber (SBR), polyacrylonitrile (PAN), polymethylacrylate (PMA), polymethylmethacrylate (PMMA), polyvinylidene fluoride (PVdF), an epoxy resin, a silicone resin, and a mixture thereof.

From the viewpoint of electrical stability, polyethylene (PE), polypropylene (PP), polymethylpentene (PMP), or polycycloolefin (PCO) is preferable, and polyethylene (PE), polypropylene (PP), or polymethylpentene (PMP) is more preferable.

The resinous base material can be produced, for example, by the following method.

The resin, the conductive material, and other components as necessary are mixed to obtain a material for a resinous base material.

Examples of the mixing method includes a method of obtaining a masterbatch of a conductive material and then further mixing the masterbatch with a resin, a method of using a masterbatch of a resin, a conductive material, and other components as necessary, and a method of collectively mixing all raw materials, and for the mixing thereof, it is possible to use a suitable known mixer with which pellet-shaped or powder-shaped components can be mixed, such as a kneader, an internal mixer, a Banbury mixer, or a roll.

The order of addition of each component at the time of mixing is not particularly limited. The obtained mixture may be further pelletized or powdered by a pelletizer or the like.

The obtained material for a resinous base material is formed into, for example, a film shape, whereby the resinous base material can be obtained. Examples of the method of forming a material into a film shape include known film forming methods such as a T-die method, an inflation method, and a calendaring method.

Examples of the polymer compound constituting the conductive composition layer include the same polymer compound contained in the coating layer that coats the above-described coated electrode active material.

In the current collector, in a case where the conductive composition layer provided on a surface that is the surface of the conductive base material and is in contact with the electrode composition layer, and the coating layer of the coated electrode active material contained in the electrode composition layer contain polymer compounds having the same composition, the affinity and the adhesiveness between the current collector and the electrode composition layer increase.

Examples of the conductive filler contained in the conductive composition layer include the same conductive auxiliary agent contained in the coating layer that coats the above-described coated electrode active material. From the viewpoint of adjusting the surface roughness of the conductive composition layer containing the polymer compound and the conductive filler described later, the conductive filler preferably contains a conductive fiber of which the shape is fibrous.

The weight proportion of the conductive filler contained in the conductive composition layer is preferably 10% to 50% by weight based on the weight of the conductive composition layer containing the polymer compound and the conductive filler.

The surface roughness Ra of the conductive composition layer, containing the polymer compound and the conductive filler, of the current collector included in the lithium ion battery of the present invention is preferably 0.1 to 5 $\mu$m and more preferably 2 to 5 $\mu$m. In a case where the surface roughness Ra of the conductive composition layer is within the above range, the adhesiveness between the current collector and the electrode composition layer is improved due to the anchoring effect.

For the surface roughness Ra, a test piece having a size of about 50 mm $\times$ 50 mm is cut out, the surface thereof is subjected a measurement to measure surface roughnesses Ra of an area of 40 $\mu$m $\times$ 40 $\mu$m at four points using an ultra-depth shape measuring microscope "VK8500" manufactured by KEYENCE Corporation under the measurement conditions of a lens of 100 fold magnification, a pitch of 0.01 $\mu$m, a shutter speed of AUTO, and a gain of 835, and the average value thereof is used.

The method of adjusting the surface roughness Ra of the conductive composition layer containing the polymer compound and the conductive filler is not particularly limited; however, examples thereof include a method of exposing a part of the conductive filler to a surface of the conductive composition layer, a method of subjecting a surface of the conductive composition layer to the embossing treatment, and a method of subjecting a surface of the conductive composition layer to the sandblasting treatment. Among these, from the viewpoint of the electrical characteristics of the current collector, a method of exposing a part of the conductive filler to a surface of the conductive composition layer is preferable.

The film thickness of the conductive composition layer, containing the polymer compound and the conductive filler, of the current collector included in the lithium ion battery of the present invention is preferably 5 to 20 $\mu$m. In a case where the film thickness of the conductive composition layer is within the above range, the electrical characteristics of the current collector are improved.

The film thickness of the conductive composition layer can be adjusted by adjusting the amount of a conductive composition slurry and the gap of an applicator at the time when the conductive composition slurry described later is applied to the conductive base material with the applicator.

The current collector included in the lithium ion battery of the present invention can be produced, for example, by the following method.

A polymer compound is produced as described above, and a solution of the obtained polymer compound and the conductive filler are mixed to produce a conductive composition slurry. The obtained conductive composition slurry is applied onto a surface of the conductive base material, in contact with the electrode composition layer, using an applicator, and vacuum dried at 60°C to 80°C for 3 hours or more to remove the solvent, whereby a conductive composition layer can be produced.

The lithium ion battery of the present invention can be obtained, for example, by the following method.

The current collector of the present invention and an electrode composition layer containing the coated electrode active material particles are combined to produce an electrode. It is possible to manufacture the lithium ion battery, for example, by a method of combining the obtained electrode and the electrode to be the counter electrode to be accommodated in a cell container together with a separator, injecting a non-aqueous electrolyte solution thereto, and sealing the cell container.

In addition, it is possible to manufacture the lithium ion battery by forming a negative electrode active material layer made of the negative electrode active material, on one surface of the positive electrode current collector of the positive electrode for the lithium ion battery of the present invention, where the positive electrode active material layer is formed only on the other surface of the positive electrode current collector, thereby producing a bipolar electrode, laminating the bipolar electrode with a separator, accommodating them in a cell container, injecting a non-aqueous electrolyte solution thereto, and sealing the cell container. In this case, both sides of the current collector will have a conductive composition layer containing the polymer compound and the conductive filler.

Examples of the separator include known separators for a lithium ion battery, such as a microporous film made of polyethylene or polypropylene, a lamination film of a porous polyethylene film and a porous polypropylene, a non-woven fabric made of a synthetic fiber (a polyester fiber, an aramid fiber, or the like), a glass fiber, or the like and those above of which the surface is attached with ceramic fine particles such as silica, alumina, or titania.

The non-aqueous electrolyte solution contains an electrolyte and a non-aqueous solvent.

As the electrolyte, an electrolyte that is used in the known non-aqueous electrolyte solution can be used, and preferred examples thereof include a lithium saltbased electrolyte of an inorganic acid, such as $LiPF_6$, $LiBF_4$, $LiSbF_6$, $LiAsF_6$, or $LiClO_4$, a sulfonylimide-based electrolyte containing a fluorine atom, such as $LiN(FSO_2)_2$, $LiN(CF_3SO_2)_2$, or $LiN(C_2F_5SO_2)_2$, and a sulfonylmethide-based electrolyte having a fluorine atom, such as $LiC(CF_3SO_2)_3$. Among these, a sulfonylimide-based electrolyte having a fluorine atom is preferable from the viewpoint of ionic conductivity at high concentration and thermal decomposition temperature, and $LiN(FSO_2)_2$ is more preferable. $LiN(FSO_2)_2$ may be used in combination with other electrolytes; however, it is more preferably used alone.

The electrolyte concentration of the non-aqueous electrolyte solution is not particularly limited; however, it is preferably 1 to 5 mol/L, preferably 1.5 to 4 mol/L, and still more preferably 2 to 3 mol/L, from the viewpoints of handleability of the non-aqueous electrolyte solution, battery capacity, and the like.

As the non-aqueous solvent, a non-aqueous solvent that is used in the known non-aqueous electrolyte solution can be used, and example, a lactone compound, a cyclic or chain-like carbonic acid ester, a chain-like carboxylic acid ester, a cyclic or chain-like ether, a phosphoric acid ester, a nitrile compound, an amide compound, a sulfone, or the like, or a mixture thereof can be used.

As the counter electrode of the above-described electrode for a lithium ion battery, an electrode that is used for the known lithium ion battery may be used. Example

Next, the present invention will be specifically described with reference to Examples; however, the present invention is not limited to Examples as long as the gist of the present invention is maintained. Unless otherwise specified, parts mean parts by weight and % means % by weight.

<Production Example 1: production of polymer compound H1>

5.0 parts of vinyl acetate, 23.7 parts of 2-ethylhexyl acrylate, and 185.5 parts of ethyl acetate were charged into a four-necked flask equipped with a stirrer, a thermometer, a reflux condenser, a dropping funnel, and a nitrogen gas introduction tube, and the temperature was raised to 75°C. 11.1 parts of vinyl acetate, 21.0 parts of 2-ethylhexyl acrylate, 28.1 parts of 2-hydroxyethyl methacrylate, 11.1 parts of acrylic acid, 0.200 parts of 2,2'-azobis(2,4-dimethylvaleronitrile), and 0.200 parts of 2,2'-azobis(2-methylbutyronitrile) were mixed. The obtained monomer mixture solution was continuously added dropwise to the flask over 4 hours with a dropping funnel, while blowing nitrogen thereto, to carry out radical polymerization. After the completion of the dropwise addition, a solution prepared by dissolving 0.800 parts of 2,2'-azobis(2,4-dimethylvaleronitrile) in 12.4 parts of ethyl acetate was continuously added thereto using a dropping funnel at 6 to 8 hours after the start of polymerization. Further, the polymerization was continued at the boiling point for 2 hours, and 702.4 parts of ethyl acetate was added thereto to obtain a solution of a polymer compound H1 having a resin concentration of 10% by weight. The weight average molecular weight (hereinafter, abbreviated as Mw) of the polymer compound H1 was 420,000.

Mw was determined by the gel permeation chromatography measurement under the following conditions.

Apparatus: "HLC-8120GPC" [manufactured by Tosoh Corporation]
Column: a column prepared by connecting each one of "TSKgel GMHXL" (two columns) and "TSKgel Multipore HXL-M" [all manufactured by Tosoh Corporation]
Sample solution: 0.25% by weight tetrahydrofuran solution
Solution injection volume: 10 $\mu$L
Flow rate: 0.6 mL/min

Measurement temperature: 40°C
Detection apparatus: refractive index detector
Reference substance: standard polystyrene

[manufactured by Tosoh Corporation]

The materials used in Examples below and the like are as follows.

Polymer compound

Polymer compound H2: polyvinylidene fluoride [prouduct name "Solef 6010", manufactured by SOLVAY S.A.]
Polymer compound H3: urethane resin [product name "Sunprene LQ582", manufactured by Sanyo Chemical Industries, Ltd.]

Conductive filler

AB: acetylene black [product name "DENKA BLACK", manufactured by Denka Company Limited]
FB: furnace black [product name "# 3030", manufactured by Mitsubishi Chemical Corporation]
KB: Ketjen black [product name "EC300J", manufactured by LION SPECIALTY CHEMICALS CO., Ltd.]
Graphite: graphite particle [product name "SNG-WXA1", manufactured by JFE Chemical Corporation]
CNT: carbon nanotube [product name "K-Nanos 100P", manufactured by KUMHO PETROCHEMICAL)
CNF: carbon nanofiber [product name "VGCF-H", manufactured by Showa Denko K.K.]

<Production Example 2: production of conductive composition slurry>

Each of the materials was mixed so that the polymer compound was, in terms of solid content, 1 part by weight, the conductive filler was 4 parts by weight, and the organic solvent was 95 parts by weight, whereby conductive composition slurries 1 to 9 were obtained. The combinations of the polymer compound and the conductive filler are as shown in Table 1. As the organic solvent, ethyl acetate was used in a case where the polymer compound was H1, N-methyl-2-pyrrolidone was used in a case where the polymer compound was H2, and N,N-dimethylformamide was used in a case where the polymer compound was H3.

<Production Example 3: production of resinous base material>

77 parts of a resin [product name "SunAllomer PC684S", manufactured by SunAllomer Ltd.], 10 parts of a conductive filler [product name "# 3030", manufactured by Mitsubishi Chemical Corporation], 8 parts of a conductive filler [product Name "K-Nanos 100P", manufactured by KUMHO PETROCHEMICAL], and 5 parts of a dispersing agent [proudct name "UMEX 1001 (an acid-modified polypropylene)", manufactured by Sanyo Chemical Industries, Ltd.] were melted and kneaded with a twin-screw extruder under the conditions of 180°C, 100 rpm, and a residence time of 5 minutes, whereby a resin composition was obtained.

The obtained resin composition was extruded from a T-die and rolled with a cooling roll of which the temperature was adjusted to 50°C, whereby a resinous base material was obtained. The film thickness of the obtained resinous base material was 50 $\mu$m.

<Example 1>

The conductive composition slurry 1 was applied onto the surface of the resinous base material using an applicator at a gap of 150 $\mu$m and vacuum dried at 70°C for 7 hours to remove the solvent, whereby a current collector in which the conductive composition layer was formed on the resinous base material was produced.

<Examples 2 to 8 and Comparative Examples 1 to 3>

Current collectors were produced in the same manner as in Example 1 except that the conductive slurry 1 of Example 1 was changed to conductive slurries 2 to 9 according to the description in Table 1.

In Comparative Example 1, a current collector was produced in the same manner as in Example 1 except that the conductive slurry 1 was changed to an ethyl acetate solution containing 1% by weight of the polymer compound H1.

In Comparative Example 2, the conductive composition layer was not formed, and the resinous base material was used as it was as a current collector.

The film thicknesses of the formed conductive composition layers were measured using a film thickness meter [manufactured by Mitutoyo Corporation], and the results are shown in Table 1.

<Measurement of penetration resistance value>

The resin current collectors were punched to φ15 mm, and the penetration resistance value of each of the resin current collectors was measured using an electric resistance measuring instrument [IMC-0240 type, manufactured by Imoto Machinery Co., Ltd.] and a resistance meter [RM3548, manufactured by HIOKI E.E. Corporation].

The resistance value of the resin current collector was measured in a state where a load of 2.16 kg was applied to the electric resistance measuring instrument, and a value 60 seconds after the load of 2.16 kg was applied was taken as the resistance value of the resin current collector. As indicated in the expression below, a value obtained by multiplying the area (1.77 cm$^2$) of the contact surface of the jig at the time of resistance measurement was used as the penetration resistance value ($\Omega \cdot$cm$^2$), and the results are shown in Table 1.

$$\text{Penetration resistance value } (\Omega \cdot \text{cm}^2) = \text{resistance}$$

$$\text{value } (\Omega) \times 1.77 \ (\text{cm}^2)$$

<Measurement of surface roughness of conductive composition layer>

For the surface roughness Ra, a test piece having a size of about 50 mm × 50 mm was cut out from the obtained current collector, the surface thereof (with the conductive composition layer being on the upper side) was subjected a measurement to measure surface roughnesses Ra of an area of 40 μm × 40 μm at four points using an ultra-depth shape measuring microscope "VK8500" manufactured by KEYENCE Corporation under the measurement conditions of a lens of 100 fold magnification, a pitch of 0.01 μm, a shutter speed of AUTO, and a gain of 835, the average value thereof was taken as the measured value of the surface roughness, and the results are shown in Table 1.

<Production Example 4: preparation of electrolyte solution>

LiN(FSO$_2$)$_2$(LiFSI) was dissolved in a mixed solvent of ethylene carbonate (EC) and propylene carbonate (PC) (EC: PC = 1: 1 in terms of volume ratio) at a rate of 2 mol/L, whereby an electrolyte solution for a lithium ion battery was prepared.

<Production Example 5: production of positive electrode composition layer 1>

Using a high-speed mixer FS25 [manufactured by EARTHTECHNICA Co., Ltd.] as an all-purpose mixer, 20 parts of carbon fiber DONACARBO Milled S-243 manufactured by Osaka Gas Chemicals Co., Ltd.], 300 parts of a solution of the polymer compound H1 obtained in Production Example 1, 57 parts of acetylene black [DENKA BLACK manufactured by Denka Company Limited], and 875 parts of LiNi$_{0.8}$Co$_{0.15}$Al$_{0.05}$O$_2$ [HED NCA-7050 manufactured by BASF TODA Battery Materials LLC, volume average particle size: 10 μm], were stirred for 15 minutes under the conditions of room temperature and 720 rpm. The pressure was reduced to 0.01 MPa while maintaining the stirring, the temperature was subsequently raised to 80°C while maintaining the stirring and the degree of pressure reduction, and the stirring, the degree of pressure reduction, and the temperature were maintained for 8 hours to distill off the volatile matter. The obtained mixture was pulverized with a hammer crusher NH-34S [manufactured by Sansho Industry Co., Ltd.], to which a 300 μm metal mesh was attached, and granulated to obtain a mixed granulated product. 98.2 parts of the obtained mixed granulated product and 1.8 parts of the electrolyte solution produced in Production Example 4 were placed in a planetary stirring type mixing and kneading device {Awatori Rentaro [manufactured by THINKY Corporation]}, mixed at 2,000 rpm for 5 minutes to produce a positive electrode composition in which the weight proportion of the electrolyte solution based on the total weight of the positive electrode composition was 1.8% by weight. In a case where the obtained positive electrode composition was pressed with a finger, a part of the positive electrode active material particles contained in the positive electrode composition were in a state of being integrally adhered in a lump shape and capable of being separated with a weak force.

The obtained positive electrode composition was placed in a powder charging port set in a roll press machine, and the forming of the positive electrode composition was carried out under the following conditions.

The positive electrode composition layer 1 discharged from the roll press machine was firmly solidified to the extent that the shape thereof was not broken even in a case of being placed on a glass plate and moved, had a uniform thickness of 350 μm, and had a smooth surface. The thickness of the positive electrode active material layer was measured with a micrometer.

The conditions of the roll press machine are as follows.

Roll size: 250mmφ x 400mm
Roll rotation speed: 1 m/min
Roll spacing (gap): 350 μm
Pressure: 10 kN (linear pressure: 25 kN/m)

<Production Example 6: production of positive electrode composition layer 2>

A positive electrode composition layer 2 was obtained in the same manner as in Production Example 5 except that the solution of the polymer compound H1 described in Production Example 5 was changed to an N-methyl-2-pyrrolidone solution having a resin concentration of 10% by weight of polyvinylidene fluoride, which was the same as that of the polymer compound H2.

<Adhesiveness evaluation>

The positive electrode composition layer was placed on the surface of each of the current collectors obtained in Examples 1 to 8 and Comparative Examples 1 to 3, on which the conductive composition layer was formed, and pressed at normal temperature and 2 MPa using a press machine [a manual heating press manufactured by Imoto Machinery Co., Ltd.]. In a case where the current collector/positive electrode composition layer after pressing was made vertical, a case where no position displacement occurred between the current collector and the positive electrode composition layer is denoted by o, and a case where any position displacement was denoted by × in Table 1.

<Manufacturing of lithium ion battery>

The positive electrode composition layer 1 or 2 was combined as shown in Table 1 on the surface of each of the current collectors obtained in Examples 1 to 8 and Comparative Examples 1 to 3, on which the conductive composition layer was formed, whereby a positive electrode was produced.
A separator (manufactured by Celgard, LLC, # 3501, thickness: 25 μm), a Li metal as the counter electrode, and a copper foil as the negative electrode current collector were arranged on the positive electrode in order, whereby a power generation element was formed. Then, tabs were connected to the positive electrode current collector and the negative electrode current collector, respectively, and the power generation element was sandwiched by an exterior finish body made of an aluminum laminated film. Then, the three sides of the exterior finish body were thermocompression-bonded and sealed to house the power generation element. An electrolyte solution was additionally injected into this power generation element, and the exterior finish body was sealed under vacuum so that the tabs were led out, whereby a lithium ion battery was obtained.

<Evaluation of battery manufacturing efficiency>

Using the current collectors obtained in Examples 1 to 8 and Comparative Examples 1 to 3, each of the lithium ion batteries were produced 10 times as described above. In a case where the current collectors obtained in Examples 1 to 8 were used, the positive electrode current collector and the positive electrode composition layer were not displaced during the production of the battery, and thus the battery could be produced 10 times without any problem. On the other hand, in a case where the current collector obtained in Comparative Example 2 or 3 was used, the positions of the positive electrode current collector and the positive electrode composition layer were displaced 3 times out of 10 times, and thus the battery could not be manufactured smoothly.
The current collector obtained in Comparative Example 1 had a high penetration resistance value.

[Table 1]

| | Conductive slurry | Current collector | | | | | Kind of positive electrode composition layer | Adhesiveness |
| | | Conductive composition layer | | | | penetration resistance value ($\Omega \cdot cm^2$) | | |
| | | Resin | Conductive filler | Film thickness ($\mu$m) | Surface roughness Ra ($\mu$m) | | | |
|---|---|---|---|---|---|---|---|---|
| Example 1 | 1 | H1 | AB | 13 | 2 | 6 | 1 | ○ |
| Example 2 | 2 | H1 | FB | 8 | 2 | 8 | 1 | ○ |
| Example 3 | 3 | H1 | KB | 20 | 5 | 3 | 1 | ○ |
| Example 4 | 4 | H1 | Graphite | 5 | 3 | 30 | 1 | ○ |
| Example 5 | 5 | H1 | CNT | 17 | 5 | 5 | 1 | ○ |
| Example 6 | 6 | H1 | CNF | 10 | 4 | 12 | 1 | ○ |
| Example 7 | 7 | H2 | AB | 14 | 2 | 3 | 2 | ○ |
| Example 8 | 8 | H2 | CNF | 12 | 5 | 7 | 2 | ○ |
| Comparative Example 1 | - | H1 | - | 2 | 0.1 | 250 | 1 | ○ |
| Comparative Example 2 | - | - | - | 0 | 1 | 8 | 1 | × |
| Comparative Example 3 | 9 | H3 | AB | 15 | 2 | 6 | 1 | × |

Industrial Applicability

The lithium ion battery of the present invention is particularly useful for a bipolar secondary battery and a lithium ion secondary battery that are used for a mobile phone, a personal computer, a hybrid vehicle, and an electric vehicle.

**Claims**

1. A lithium ion battery comprising:

   a current collector; and
   an electrode composition layer formed on a surface of the current collector,
   wherein the electrode composition layer contains coated electrode active material particles, each of which is obtained by coating at least a part of a surface of an electrode active material particle with a coating layer containing a polymer compound,
   the current collector has a conductive base material and a conductive composition layer containing a polymer compound and a conductive filler, on a surface of the conductive base material, the surface being in contact with the electrode composition layer, and
   the polymer compound contained in the conductive composition layer and the polymer compound contained in the coating layer have the same composition.

2. The lithium ion battery according to Claim 1,
   wherein the polymer compound is a fluororesin, a polyester resin, a polyether resin, a vinyl resin, a urethane resin, a polyamide resin, or a mixture thereof.

3. The lithium ion battery according to Claim 1 or 2, wherein the conductive filler includes conductive fibers.

4. The lithium ion battery according to any one of Claims 1 to 3, wherein a surface roughness Ra of the conductive composition layer containing the polymer compound and the conductive filler is 0.1 to 5 $\mu$m.

5. The lithium ion battery according to any one of Claims 1 to 4, wherein a film thickness of the conductive composition layer containing the polymer compound and the conductive filler is 5 to 20 $\mu$m.

<table>
<tr><td colspan="3" align="center">**INTERNATIONAL SEARCH REPORT**</td><td>International application No.</td></tr>
<tr><td colspan="4"></td></tr>
</table>

**INTERNATIONAL SEARCH REPORT**

International application No.

PCT/JP2020/012626

**A. CLASSIFICATION OF SUBJECT MATTER**

H01M  4/36(2006.01)i;  H01M  4/66(2006.01)i;  H01M  4/70(2006.01)i;  H01M 10/052(2010.01)i

FI: H01M10/052; H01M4/36 C; H01M4/66 A; H01M4/70 Z

According to International Patent Classification (IPC) or to both national classification and IPC

**B. FIELDS SEARCHED**

Minimum documentation searched (classification system followed by classification symbols)

H01M4/36; H01M4/66; H01M4/70; H01M10/052

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-153224 A (NISSAN MOTOR CO., LTD.) 08.07.2010 (2010-07-08) paragraphs [0010], [0017], [0020], [0024]-[0025], [0037], [0055] | 1-4 |
| Y | paragraphs [0010], [0017], [0020], [0024]-[0025], [0037], [0055] | 1-5 |
| X | JP 2016-164978 A (DYNIC CORPORATION) 08.09.2016 (2016-09-08) paragraphs [0012], [0021], [0043], [0054] | 1-3 |
| Y | paragraphs [0012], [0021], [0043], [0054] | 1-5 |
| Y | JP 2010-108971 A (NIPPON ZEON CO., LTD.) 13.05.2010 (2010-05-13) paragraphs [0002], [0006]-[0007], [0016], [0034], [0054], [0060], [0062] | 1-5 |
| Y | WO 2013/018686 A1 (FURUKAWA SKY ALUMINUM CORP.) 07.02.2013 (2013-02-07) paragraph [0038] | 4 |
| Y | WO 2019/022063 A1 (GS YUASA INTERNATIONAL LTD.) 31.01.2019 (2019-01-31) paragraph [0052] | 5 |

☒ Further documents are listed in the continuation of Box C.      ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 June 2020 (05.06.2020) | 16 June 2020 (16.06.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2020/012626

C (Continuation).    DOCUMENTS CONSIDERED TO BE RELEVANT

| Category* | Citation of document, with indication, where appropriate, of the relevant passages | Relevant to claim No. |
|---|---|---|
| Y | WO 2019/017054 A1 (PANASONIC IP MANAGEMENT CO., LTD.) 24.01.2019 (2019-01-24) paragraph [0035] | 5 |
| Y | JP 2017-073205 A (FURUKAWA CO., LTD.) 13.04.2017 (2017-04-13) paragraph [0071] | 5 |
| A | JP 2018-081907 A (SANYO CHEMICAL INDUSTRIES, LTD.) 24.05.2018 (2018-05-24) | 1-5 |
| A | WO 2013/121624 A1 (NEC CORP.) 22.08.2013 (2013-08-22) | 1-5 |

Form PCT/ISA/210 (continuation of second sheet) (January 2015)

**INTERNATIONAL SEARCH REPORT**
Information on patent family members

| International application no. |
|---|
| PCT/JP2020/012626 |

| Patent Documents referred in the Report | Publication Date | Patent Family | Publication Date |
|---|---|---|---|
| JP 2010-153224 A | 08 Jul. 2010 | (Family: none) | |
| JP 2016-164978 A | 08 Sep. 2016 | (Family: none) | |
| JP 2010-108971 A | 13 May 2010 | (Family: none) | |
| WO 2013/018686 A1 | 07 Feb. 2013 | US 2014/0162122 A1 paragraph [0041] EP 2738855 A1 CN 103733400 A KR 10-2014-0051324 A TW 201318258 A | |
| WO 2019/022063 A1 | 31 Jan. 2019 | (Family: none) | |
| WO 2019/017054 A1 | 24 Jan. 2019 | (Family: none) | |
| JP 2017-073205 A | 13 Apr. 2017 | (Family: none) | |
| JP 2018-081907 A | 24 May 2018 | US 2019/0267610 A1 WO 2018/084320 A1 EP 3537514 A1 CN 110249456 A | |
| WO 2013/121624 A1 | 22 Aug. 2013 | US 2015/0037671 A1 CN 104137305 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017117713 A

- JP 2012150905 A